# EUROPEAN PATENT APPLICATION

(11) **EP 2 083 420 A1**
(43) Date of publication of application: **29.07.2009**
(21) Application number: 07829211.7
(22) Date of filing: 04.10.2007
(51) Int. Cl.: G11B 7/0065, G03H 1/26, G11B 7/135

(54) **HOLOGRAM RECORDING DEVICE, HOLOGRAM REPRODUCING DEVICE, INFORMATION ENCODING METHOD, RECORDING METHOD, AND INFORMATION REPRODUCING METHOD**

(30) Priority: 05.10.2006 JP 2006274244; 02.10.2007 JP 2007258620
(71) Applicant: Sharp Kabushiki Kaisha, Osaka-shi, Osaka 545-8522 (JP)
(72) Inventor: NAKAMURA, Atsushi, Osaka-shi, Asaka 545-8522 (JP)
(74) Representative: Müller - Hoffmann & Partner
(86) International application number: PCT/JP2007/069473
(87) International publication number: WO 2008/041746

(57) **Abstract**

A holographic recording and reproduction apparatus (100) includes a spatial light modulator (112) for spatially modulating a luminous flux for holographic recording of information and an objective lens (106) for focusing object light and reference light for recording on a recording medium. The spatial light modulator (112) is controlled by a control device for generating a two-dimensional digital pattern corresponding to the information, that includes n first sub sets each including sixteen elements. The first sub set includes four second sub sets, and each second sub set has four elements. The control device sets one element among the elements included in each of three second sub sets among the four second sub sets to a first state and sets three elements to a second state, and sets four elements included in one remaining second sub set among the four second sub sets to the second state.

## Description

### TECHNICAL FIELD

The present invention relates to a technique used for a holography memory for information storage using light.

### BACKGROUND ART

Using a light source such as laser, light scattered by an object (referred to as "object light" or "signal light") and non-scattered light from the same light source (referred to as "reference light" or "pump light") interfere with each other, and resultant interference fringes (referred to as "hologram") are recorded in a storage medium such as a photoplate capable of optical recording. The technique for reproducing the light scattered by the object through irradiation of the recorded interference fringes only with the reference light during reproduction is referred to as holography.

When a depth of a storage medium is sufficiently greater than a wavelength of recording light, a plurality of holograms can be recorded in the same medium. This technique is referred to as volume-multiplexing holography. An index of refraction of a certain type of material such as photorefractive crystals or a photosensitive photopolymer is varied by irradiation with light. Accordingly, such a material is used for a recording medium for volume-multiplexing holography.

On the other hand, in recording digital information, object light is given two-dimensional digital pattern information as passing through a two-dimensional spatial light modulator such as a liquid crystal panel to have intensity distribution or phase distribution. The object light after passage through the two-dimensional spatial light modulator is condensed by a lens and emitted to a recording medium. Thus, a system for recording and reproducing information using holograms obtained by providing object light with two-dimensional digital pattern information is referred to as a holographic memory.

Japanese Patent Laying-Open No. 2001-75463 (Patent Document 1) discloses a method for lessening medium saturation caused by consecutive on (bright) bits and improving recording density, a storage capacity and a data transfer speed of an apparatus as measures for providing object light with digital pattern information through a two-dimensional spatial light modulator.

According to the method disclosed in Japanese Patent Laying-Open No. 2001-75463, digital pattern information in which information bits indicating two types of on (bright) and off (dark) are two-dimensionally arranged is generated. Here, nxn bits (n is a prescribed integer not smaller than 3) are defined as a unit code block and the number of on bits s in the unit code block is defined as an integer n-1. Here, m is selected such that a value of 2 to the mth power (m is an integer) has a maximum value not exceeding the total number of patterns in which on bit count in the unit code block is s, and information of m bits is expressed with the unit code block.

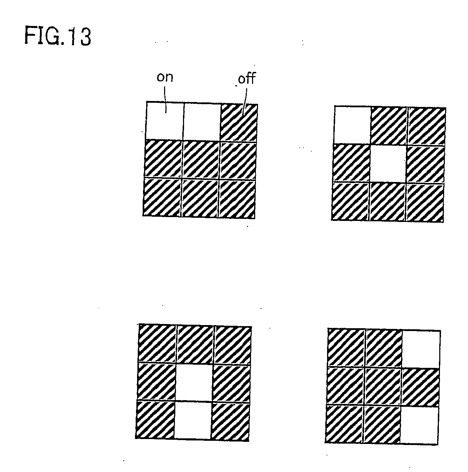

Fig. 13 is a diagram showing an exemplary two-dimensional digital pattern in an example where n=3.

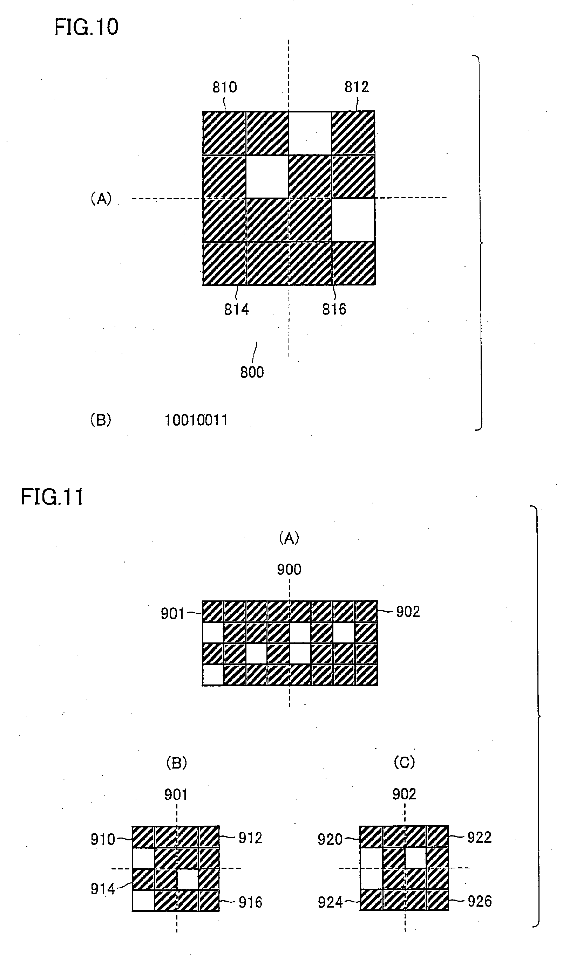

Fig. 13 shows an on (bright) bit in white and an off (dark) bit with hatching lines. As shown in Fig. 11, when n=3, the number of on bits s is 2 (=3-1).
Patent Document 1: Japanese Patent Laying-Open No. 2001-75463

### DISCLOSURE OF THE INVENTION

### PROBLEMS TO BE SOLVED BY THE INVENTION

According to the method disclosed in Japanese Patent Laying-Open No. 2001-75463, however, when crosstalk or luminance variation originating from an optical system is caused in reproduced light, an error may be produced if one page representing a two-dimensional digital pattern included in one object light luminous flux is subjected to binarization processing based on one threshold value.

Specifically, for example, when reproduced image information partially includes luminance variation, a data bit that should correctly be processed as "1" may erroneously be recognized as "0" due to luminance variation, because a luminance value is lower than the threshold value. In contrast, a luminance value of a block that should correctly be processed as "0" may erroneously be recognized as "1" because the luminance value has exceeded the threshold value. In addition, if an area per one page is great, an error bit is more likely when binarization processing based on a single threshold value is performed, due to uneven intensity distribution of reproduced light.

The present invention was made to solve the above-described problems, and an object of the present invention is to provide a holographic recording and reproduction apparatus achieving reduction in error bits.

### MEANS FOR SOLVING THE PROBLEMS

According to one aspect of the present invention, a holographic recording apparatus for recording information using optical interference fringes includes a spatial light modulator (112) for generating a two-dimensional digital pattern corresponding to the information with n first sub sets each including sixteen elements, and a control device (210) therefor. The first sub set includes four second sub sets each including four elements. The control device (210) includes means for setting one of the four elements included in each of three second sub sets among the four second sub sets to a first state and three elements to a second state, and means for setting all four elements in one remaining second sub set among the four second sub sets to the second state.

Preferably, the spatial light modulator (112) includes a display device (210, 202a, 202b, 202c, 202d) for displaying the two-dimensional digital pattern. The display device (210, 202a, 202b, 202c, 202d) has a reference light generation region (202a, 202b, 202c, 202d) for generating reference light for recording from a luminous flux incident on the spatial light modulator, and an object light generation region (201) for generating object light from the luminous flux incident on the spatial light modulator. The control device (210) has the two-dimensional digital pattern corresponding to the information displayed on the object light generation region (201).

Preferably, the first state represents an on (bright) bit and the second state represents an off (dark) bit.

Preferably, the first state represents an off (dark) bit and the second state represents an on (bright) bit.

According to another aspect of the present invention, a holographic reproduction apparatus for reading information from a recording medium (107) in which optical interference fringes are recorded includes a photodetector (110) for detecting reproduction light from the recording medium (107), means (110, S900) for dividing a two-dimensional digital pattern included in the reproduction light into a plurality of first sub sets, the first sub set including four second sub sets arranged at prescribed positions in the first sub set respectively, the second sub set having four elements, the element being in any state of a first state and a second state, and means (110, S904) for dividing the first sub set into a plurality of the second sub sets for each of the plurality of first sub sets and detecting a second sub set of which four elements are all in the second state from among the plurality of second sub sets.

Preferably, means (110, S906) for correcting luminance of the plurality of second sub sets based on a luminance value of the second sub set of which four elements are all in the second state is further included.

Preferably, the information corresponds to the two-dimensional digital pattern including n first sub sets each including sixteen elements. In three second sub sets among the four second sub sets, one element among the four elements included in the second sub set is in the first state and three elements thereamong are in the second state. In one remaining second sub set among the four second sub sets, four elements included in the second sub set are all in the second state.

Preferably, the second sub set of which four elements are all in the second state is lowest in luminance value among the plurality of second sub sets. Means (110, S1408) for ranking, for each of the plurality of first sub sets, each element included in the first sub set based on the luminance value is further included. Means (110, S 1410) for correcting luminance corrects three elements highest in luminance value among sixteen elements included in the first sub set to the first state and remaining elements to the second state.

Preferably, the second sub set of which four elements are all in the second state is highest in luminance value among the plurality of second sub sets. Means (110, S 1408) for ranking, for each of the plurality of first sub sets, each element included in the first sub set based on the luminance value is further included. Means (110, S 1410) for correcting luminance corrects three elements lowest in luminance value among sixteen elements included in the first sub set to the first state and remaining elements to the second state.

Preferably, the second sub set of which four elements are all in the second state is lowest in luminance value among the plurality of second sub sets. Means (110, S1506, S1508) for correcting luminance corrects all elements included in the second sub set of which four elements are all in the second state to off (dark) bits, and corrects, for each of the second sub sets except for the second sub set of which four elements are all in the second state among the second sub sets included in the first sub set, an element highest in luminance value among elements included in each second sub set to on (bright) bit and corrects elements other than the element highest in luminance value to the off (dark) bits.

Preferably, the second sub set of which four elements are all in the second state is highest in luminance value among the plurality of second sub sets. Means (110, S1506, S1508) for correcting luminance corrects all elements included in the second sub set of which four elements are all in the second state to on (bright) bits, and corrects, for each of the second sub sets except for the second sub set of which four elements are all in the second state among the second sub sets included in the first sub set, an element highest in luminance value among elements included in each second sub set to off (dark) bit and corrects elements other than the element highest in luminance value to the on (bright) bits.

According to yet another aspect of the present invention, an information encoding method for displaying information as a two-dimensional digital pattern of 8n bits every 16n bit patterns, the two-dimensional digital pattern including n first sub sets each including sixteen bit patterns, the first sub set including four second sub sets arranged at prescribed positions in the first sub set respectively, each second sub set having four bit patterns, includes the steps of: setting one bit pattern among four bit patterns included in each of three second sub sets among the four second sub sets to a first state and three bit patterns to a second state (S804); and setting all of the four bit patterns included in one remaining second sub set among the four second sub sets to a second state (S802).

Preferably, in the step of setting all of the four bit patterns to a second state (S802), 2n bits among the 8n bits are determined.

Preferably, in the step of setting one bit pattern among four bit patterns to a first state and three bit patterns to a second state (S804), 6n bits among the 8n bits are determined.

Preferably, the step of displaying the information as the two-dimensional digital pattern for holographic recording (S806) is further included.

According to yet another aspect of the present invention, a recording method for writing a digital pattern in a recording medium (107) by using an information encoding method for displaying information as a two-dimensional digital pattern of 8n bits every 16n bit patterns, the two-dimensional digital pattern including n first sub sets each including sixteen bit patterns, the first sub set including four second sub sets arranged at prescribed positions in the first sub set respectively, each second sub set having four bit patterns, includes the steps of setting one bit pattern among four bit patterns included in each of three second sub sets among the four second sub sets to a first state and three bit patterns to a second state (S804); setting all of the four bit patterns included in one remaining second sub set among the four second sub sets to a second state (S802); and writing the four second sub sets in the recording medium (107) (S808).

Preferably, the recording medium (107) is a hologram memory.

According to yet another aspect of the present invention, an information reproduction method for reading a two-dimensional digital pattern recorded by using an information encoding method for displaying information as a two-dimensional digital pattern of 8n bits every 16n bit patterns, includes the steps of: detecting the two-dimensional digital pattern; dividing the two-dimensional digital pattern into a plurality of first sub sets, the first sub set including four second sub sets arranged at prescribed positions in the first sub set respectively, the second sub set having four bit patterns, the element being in any state of a first state and a second state; and dividing, for each of the plurality of first sub sets, the first sub set into a plurality of the second sub sets and detecting a second sub set of which four bit patterns are all in the second state from among the plurality of second sub sets (S900, S902).

Preferably, the step of correcting luminance of the plurality of second sub sets based on a luminance value of the second sub set of which four bit patterns are all in the second state (S906) is further included.

Preferably, the information corresponds to the two-dimensional digital pattern including n first sub sets each including sixteen bit patterns. In three second sub sets among the four second sub sets, one bit pattern among the four bit patterns included in the second sub set is in the first state and three digital patterns thereamong are in the second state. In one remaining second sub set among the four second sub sets, four bit patterns included in the second sub set are all in the second state.

Preferably, the second sub set of which four bit patterns are all in the second state is lowest in luminance value among the plurality of second sub sets. The steps of ranking, for each of the plurality of first sub sets, each bit pattern included in the first sub set based on the luminance value (S1408) and correcting three bit patterns highest in luminance among sixteen bit patterns included in each of the plurality of first sub sets to the first state and remaining bits to the second state in accordance with a result of ranking based on the luminance value (S 1410) are further included.

Preferably, the second sub set of which four bit patterns are all in the second state is highest in luminance value among the plurality of second sub sets. The steps of ranking, for each of the plurality of first sub sets, each bit pattern included in the first sub set based on the luminance value (S 1408) and correcting three bit patterns lowest in luminance among sixteen bit patterns included in each of the plurality of first sub sets to the first state and remaining bit patterns to the second state in accordance with a result of ranking based on the luminance value (S 1410) are further included.

Preferably, the second sub set of which four bit patterns are all in the second state is lowest in luminance value among the plurality of second sub sets. The steps of correcting all bit patterns included in the second sub set of which four bit patterns are all in the second state to off (dark) bits (S1506) and correcting, for each of the second sub sets except for the second sub set of which four bit patterns are all in the second state among the second sub sets included in the first sub set, a bit pattern highest in luminance value among bit patterns included in each second sub set to on (bright) bit and correcting bit patterns other than the bit pattern highest in luminance value to the off (dark) bits (S 1508) are further included.

Preferably, the second sub set of which four bit patterns are all in the second state is lowest in luminance value among the plurality of second sub sets. The steps of correcting all bit patterns included in the second sub set of which four bit patterns are all in the second state to on (bright) bits (S1506) and correcting, for each of the second sub sets except for the second sub set of which four bit patterns are all in the second state among the second sub sets included in the first sub set, a bit pattern highest in luminance value among bit patterns included in each second sub set to off (dark) bit and correcting bit patterns other than the bit pattern highest in luminance value to the on (bright) bits (S 1508) are further included.

Preferably, the information recorded in a hologram memory is read.

### EFFECTS OF THE INVENTION

According to the present invention, a two-dimensional digital pattern can be recorded with redundancy. Thus, error bits can be reduced.

### BRIEF DESCRIPTION OF THE DRAWINGS

Fig. 1 is a diagram showing a manner during recording in a holographic recording and reproduction apparatus according to a first embodiment of the present invention.
Fig. 2 is a diagram schematically showing a structure of a spatial light modulator 112.
Fig. 3 is a diagram showing a manner during reproduction in the holographic recording and reproduction apparatus according to the first embodiment of the present invention.
Fig. 4 is a diagram showing an optical system in the holographic recording and reproduction apparatus according to the present invention, different from that in Figs. 1 to 3.
Fig. 5 is a diagram for illustrating a method of expressing information indicated with two bits among eight bits.
Fig. 6 is a diagram for illustrating a method of expressing information indicated with six remaining bits among eight bits.
Fig. 7 is a diagram for illustrating encoding of 8-bit information.
Fig. 8 is a flowchart showing a procedure for recording in a recording medium 107 by a holographic recording and reproduction apparatus 100 according to the first embodiment.
Fig. 9 is a flowchart showing a procedure for reproduction of information recorded in recording medium 107 by holographic recording and reproduction apparatus 100 according to the first embodiment.
Fig. 10 is a diagram showing an example of a reproduced two-dimensional digital pattern 800.
Fig. 11 is a diagram showing a reproduced image including 4×8 pixels and blocks resulting from division.
Fig. 12 is a diagram showing a reproduced image including 8×8 pixels and blocks resulting from division.
Fig. 13 is a diagram showing an exemplary two-dimensional digital pattern in an example where n=3.
Fig. 14 is a flowchart showing a procedure for reproduction of information recorded in recording medium 107 by holographic recording and reproduction apparatus 100 according to a second embodiment.
Fig. 15 is a flowchart showing a procedure for reproduction of information recorded in recording medium 107 by holographic recording and reproduction apparatus 100 according to a third embodiment.
Fig. 16 is a diagram showing a result of evaluation of errors caused in a reproduction method in the third embodiment and a reproduction method through binarization processing using a single threshold value.

### DESCRIPTION OF THE REFERENCE SIGNS

100 holographic recording and reproduction apparatus; 102 beam splitter; 103 a, 103b relay lens; 104 mirror; 105 quarter-wave plate; 106 objective lens; 107 recording medium; 108 photosensitive material; 109a, 109b substrate; 110 photodetector; 111 actuator; 112 spatial light modulator; 201 object light display region; 202a, 202b, 202c, 202d reference light display region; 204 object light generation processing unit; 206 reference-light-for-recording generation processing unit; 208 reference-light-for-reproduction generation processing unit; 210 control device; 400 recording medium; 401 object light; 402 reference light; and 403 lens.

### BEST MODES FOR CARRYING OUT THE INVENTION

An embodiment of the present invention will be described hereinafter with reference to the drawings. In the description below, the same elements have the same reference characters allotted and their label and function are also identical. Therefore, detailed description thereof will not be repeated.

### (First Embodiment)

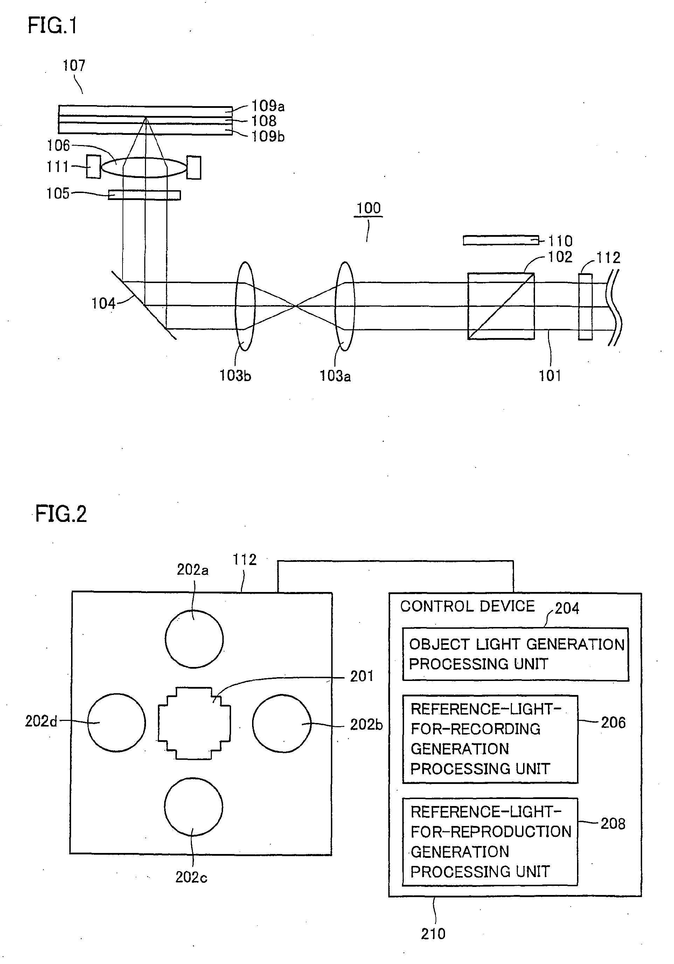

Fig. 1 is a diagram showing a manner during recording in a holographic recording and reproduction apparatus according to a first embodiment of the present invention.

A structure and a function during recording of the holographic recording and reproduction apparatus according to the present invention will be described with reference to Fig. 1.

In Fig. 1, a holographic recording and reproduction apparatus 100 includes a spatial light modulator 112 controlled by a control device 210, a beam splitter 102, relay lenses 103a, 103b, a mirror 104, a quarter-wave plate 105, an objective lens 106, a recording medium 107, a photodetector 110, and an actuator 111. Recording medium 107 is made up from a photosensitive material 108 and substrates 109a, 109b, and interference fringes (=holograms) are formed as a result of modulation of an index of refraction. In addition, a reflection film is provided on substrate 109a located opposite to a light incident side.

During recording by holographic recording and reproduction apparatus 100, a coherent luminous flux emitted from a not-shown light source passes through or is reflected by spatial light modulator 112, so that it is spatially modulated to a luminous flux 101 including object light and reference light.

Fig. 2 is a diagram schematically showing a structure of spatial light modulator 112.

As shown in Fig. 2, spatial light modulator 112 has an object light display region 201 for generating object light and reference light display regions 202a, 202b, 202c, 202d for generating reference light, and it is controlled by control device 210.

Control device 210 includes an object light generation processing unit 204 for converting information to be recorded into a two-dimensional digital pattern and providing the resultant two-dimensional digital pattern to the object light display region, a reference-light-for-recording generation processing unit 206 for controlling the spatial light modulator to generate reference light for recording, and a reference-light-for-reproduction generation processing unit 208 for controlling the spatial light modulator to generate reference light for reproduction. The coherent luminous flux is modulated in its amplitude in each region as necessary. For example, a transmitting-type liquid crystal element or the like can be employed for spatial light modulator 112. Object light generation processing unit 204 indicates passage or cut-off for each pixel of a liquid crystal element in object light display region 201. Thus, each pixel is associated with data of one bit.

Referring back to Fig. 1, relay lenses 103a, 103b are a pair of lenses, and form an image that was displayed on spatial light modulator 112 again as a real image. Mirror 104 is an optical element directing a travel direction of light for recording and light for reproduction toward objective lens 106. Quarter-wave plate 105 is a phase plate varying an optical path difference of polarized light rays oscillating in directions perpendicular to each other by a quarter wavelength. Quarter-wave plate 105 varies P-polarized light to circularly polarized light, and as the circularly polarized light passes through quarter-wave plate 105, it is varied to S-polarized light. Objective lens 106 serves to converge light for recording and light for reproduction on recording medium 107, and a prescribed position of recording medium 107 is irradiated with the light for recording and the light for reproduction through objective lens 106.

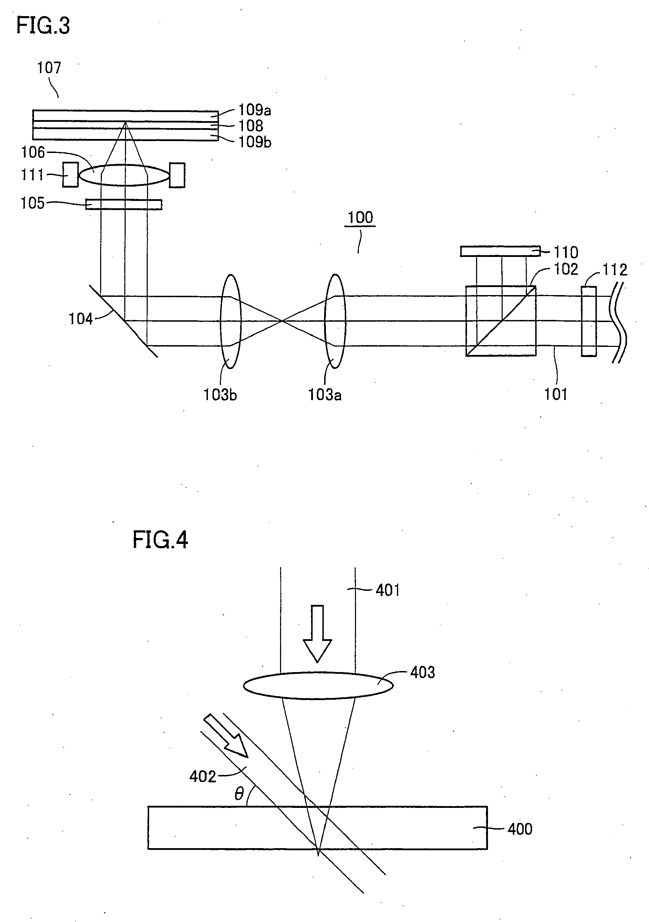

Fig. 3 is a diagram showing a manner during reproduction in the holographic recording and reproduction apparatus according to the first embodiment of the present invention.

A function during reproduction of the holographic recording and reproduction apparatus according to the first embodiment of the present invention will be described with reference to Fig. 3.

During reproduction, a hologram recorded on recording medium 107 is irradiated with the luminous flux the same as the reference light used for recording, to thereby generate reproduction light. The reproduction light propagates as it is reflected by the reflection film on substrate 109a toward objective lens 106 and varied by quarter-wave plate 105 to a luminous flux in a polarization direction different from that during recording. The reproduction light is reflected by beam splitter 102 toward photodetector 110. Photodetector 110 serves to reproduce the recorded information upon receiving the reproduction light, and has a large number of light-receiving elements arranged in matrix. A CCD array adopting CCD (Charge Coupled Devices), a CMOS sensor adopting a CMOS (Complementary Metal-Oxide Semiconductor), or the like can be employed as light-receiving elements.

Though an optical system as shown in Figs. 1 to 3 is used in the present embodiment, the optical system is not limited as such and an optical system as shown in the following drawing may be used.

Fig. 4 is a diagram showing an optical system in the holographic recording and reproduction apparatus according to the present invention, different from that in Figs. 1 to 3.

As shown in Fig. 4, an optical path for object light 401 and an optical path for reference light 402 are different from each other in this optical system. A recording medium 400 is irradiated with object light 401 as a spherical wave through a lens 403 and irradiated with reference light 402 as a plane wave. Therefore, in the case of the optical system in Fig. 4, it is object light 401 that is focused on the recording medium through lens 403. Here, an angle-multiplexing optical system with which multiplexed recording is achieved with an incident angle θ of reference light 402 being varied may be employed.

Next, a method of encoding information to be provided to a coherent luminous flux (hereinafter referred to as "page data") in object light display region 201 of spatial light modulator 112 included in the holographic recording and reproduction apparatus as above will initially be described, and description of a recording method and an information reproduction method will follow. For the sake of simplification, a two-dimensional digital pattern of eight bits including 4×4 pixels will be described hereinafter by way of example.

According to the information encoding method of the present invention, in the two-dimensional digital pattern of eight bits expressed with 4×4 pixels, a region to serve as the reference of a luminance value among 4×4 pixels is indicated with two bits among the eight bits. In information reproduction processing, luminance is adjusted every sixteen pixels based on a luminance value of a region serving as the reference. Thus, error bits caused by luminance variation in a reproduced image can be reduced.

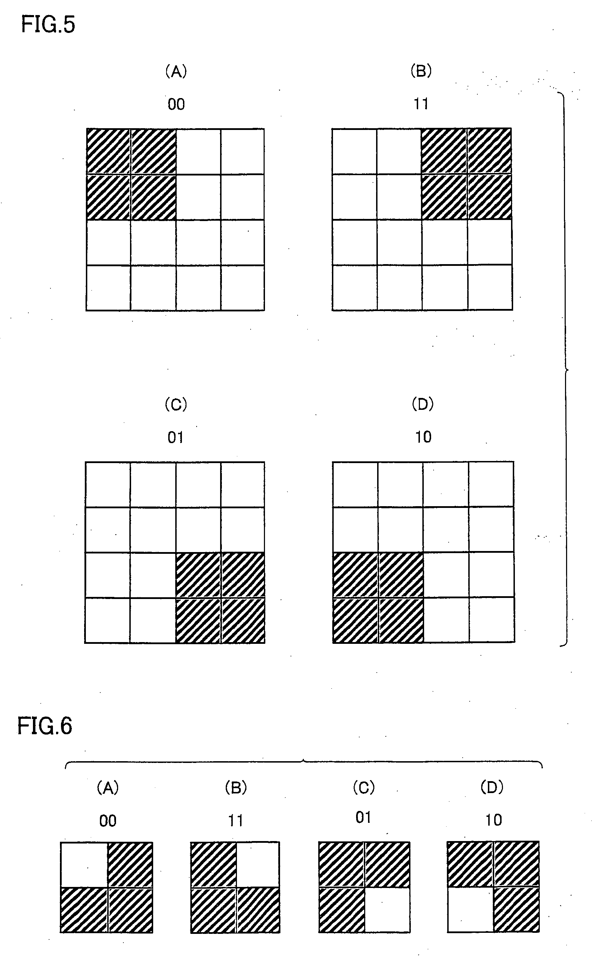

Fig. 5 is a diagram for illustrating a method of expressing information indicated with two bits among eight bits.

As shown in Fig. 5, according to the information encoding method of the present invention, a region including 2×2 pixels that always cuts off light is determined, from among 4×4 pixels of the spatial light modulator. Namely, two bits out of eight bits are used to determine a region always cutting off light. It is noted that Fig. 5 shows a light cut-off region with a hatched portion and a light-transmitting region with a white region.

For example, if first two bits indicate "00" in a bit column of eight bits, upper left 2×2 pixels among 4×4 pixels serve as a region always cutting off light as shown in Fig. 5(A). In addition, if first two bits indicate "11", upper right 2×2 pixels among 4×4 pixels serve as a region always cutting off light as shown in Fig. 5(B). Moreover, if first two bits indicate "01", lower left 2×2 pixels among 4×4 pixels serve as a region always cutting off light as shown in Fig. 5(C). Further, a rule is provided such that, if first two bits indicate "10", lower right 2×2 pixels among 4×4 pixels serve as a region always cutting off light as shown in Fig. 5(D).

Thus, according to the information encoding method of the present invention, a position of the region always cutting off light among 4×4 pixels expresses two bits of the information of eight bits. Here, an individual pixel does not necessarily have to be one pixel in the spatial light modulator, and it may be a set of pixels. In addition, though first two bits are used as criteria in the example above, the present invention is not limited as such.

In succession, a method of expressing information indicated with six remaining bits among the eight bits will be described.

In the information encoding method according to the present invention, the six remaining bits are expressed, with a region other than the hatched portion shown in Fig. 5 being divided into three regions of two bits each. For the six remaining bits, a pattern of display is determined such that it proceeds from the upper left of the region other than the hatched portion shown in Fig. 5 toward the right end, and moving to the left end when the right end is reached and moving downward by two pixels, it again proceeds toward the right end. As the region where all four pixels cut off light is known, such a region is skipped in determination of the display pattern.

Fig. 6 is a diagram for illustrating a method of expressing information indicated with six remaining bits among the eight bits.

As shown in Fig. 6, six remaining bits can be displayed as being divided into three regions of two bits each, by using the region other than the hatched portion shown in Fig. 5. Four patterns including 2×2 pixels, only one pixel thereof allowing light transmission and other three pixels thereof cutting off light, are employed as the display patterns in which six remaining bits are divided into three regions of two bits each having 2 bits. There are four cases of light transmission through pixels. Namely, a least pattern corresponds to two bits.

For example, if two bits indicate "00", an upper left pixel among 2×2 pixels serves as a region that always allows passage of light as shown in Fig. 6(A). In addition, if two bits indicate "11", an upper right pixel among 2×2 pixels serves as a region that always allows passage of light as shown in Fig. 6(B). Moreover, if two bits indicate "01", a lower right pixel among 2×2 pixels serves as a region that always allows passage of light as shown in Fig. 6(C). Further, a rule is provided such that, if two bits indicate "10", a lower left pixel among 2×2 pixels serves as a region that always allows passage of light as shown in Fig. 6(D). It is noted that Fig. 6 shows a light cut-off region with a hatched portion and a light-transmitting region with a white region.

As described above, as 2×2 pixels express two bits, at most two bright bits (light-transmitting pixels) can be consecutive in one direction in the 4×4 pixels. Thus, concentration of bright bits in the two-dimensional digital pattern can be avoided.

In addition, in the description above, the hatched portion indicates the light cut-off region and the white region indicates the light-transmitting region, however, the indication may be opposite.

The information encoding method according to the present invention under the rule as described above will now be described with reference to a specific example.

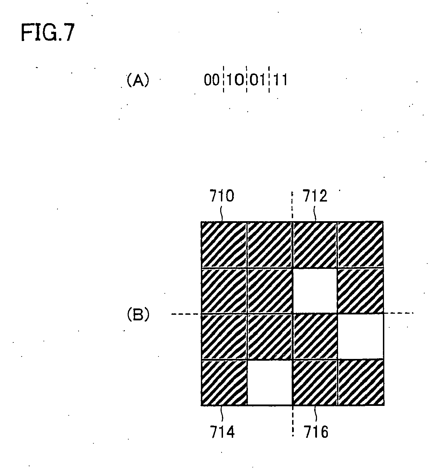

Fig. 7 is a diagram for illustrating encoding of 8-bit information.

Fig. 7(A) shows 8-bit information and Fig. 7(B) shows a two-dimensional digital pattern obtained by encoding the 8-bit information. It is noted that a hatched portion indicates a light cut-off region and a white region indicates a light-transmitting region.

As shown in Fig. 7(A), first two bits indicate "00" in a bit column of eight bits. Accordingly, 2×2 pixels 710 in Fig. 7(B) serve as the light cut-off region as shown in Fig. 5(A). In addition, next two bits indicate "10". Accordingly, a lower left pixel in 2×2 pixels 712 serves as the light-transmitting region as shown in Fig. 6(D). Moreover, next two bits "01" correspond to 2×2 pixels 714 and further next two bits "11" correspond to 2×2 pixels 716.

In the present embodiment, for the sake of simplification, eight bits are expressed by using 4×4 pixels as an amount of information included in the page data, however, the present embodiment is not limited as such. For example, a method of expressing information of sixteen bits by using 4×8 pixels as the page data and generating information of eight bits as described above every 4×4 pixels, a method of expressing information of 32 bits by using 8×8 pixels and generating information of eight bits as described above every 4×4 pixels, a method of expressing information of 8n bits by using 16n pixels and generating information of eight bits as described above every 4×4 pixels, or the like may be used to increase an amount of information included in the page data for recording information.

A procedure for recording information in recording medium 107 by encoding the information to be recorded into the two-dimensional digital pattern as described above by means of control device 210 and providing the two-dimensional digital pattern to object light display region 201 will now be described. For the sake of simplification, a procedure for recording information of eight bits will be described here.

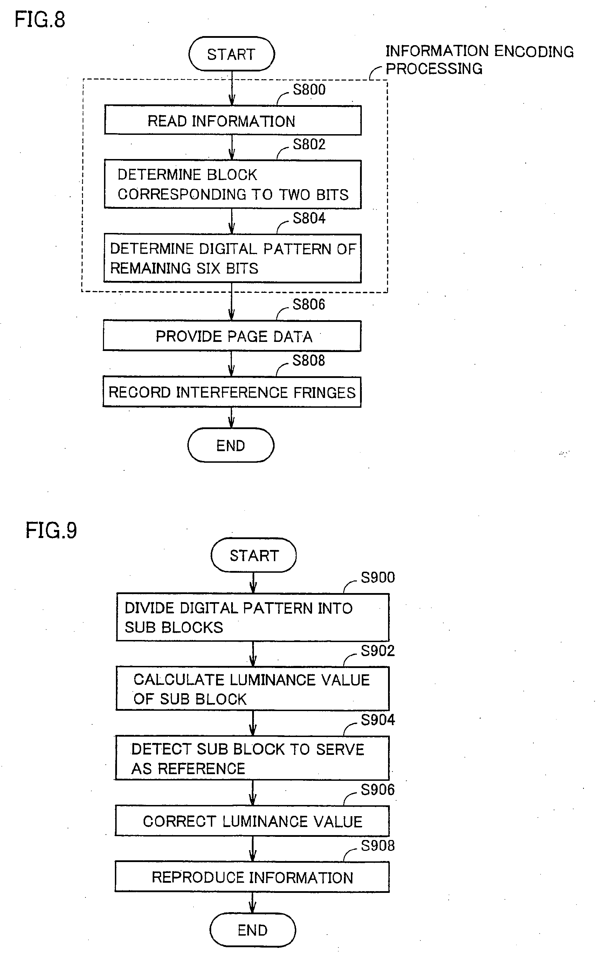

Fig. 8 is a flowchart showing a procedure for recording in recording medium 107 by holographic recording and reproduction apparatus 100.

A procedure for recording of information by holographic recording and reproduction apparatus 100 will be described with reference to Fig. 8.

In step S800, control device 210 reads information to be recorded.

Next, in step S802, control device 210 determines a block corresponding to first two bits among eight bits. Here, as shown in Fig. 5, the light cut-off region is determined.

In succession, in step S804, control device 210 determines a digital pattern for six remaining bits. Here, six bits are divided into groups each having two bits, and a digital pattern corresponding to each group of two bits is determined as shown in Fig. 6. Then, a pattern of display is determined such that it proceeds from the upper left of a region other than the region determined in step S802 toward the right end, and moving to the left end when the right end is reached and moving downward by two pixels, it again proceeds toward the right end.

Then, in step S806, control device 210 provides generated two-dimensional digital pattern to object light display region 201 to generate object light.

Finally, in step S808, lens 106 focuses object light and reference light for recording on recording medium 107. Interference between the object light and the reference light for recording occurs, and interference fringes between the object light and the reference light for recording are recorded.

It is noted that the procedure from steps S800 to 804 corresponds to the processing using the information encoding method according to the present invention.

A processing method for reproduction of information by photodetector 110 in holographic recording and reproduction apparatus 100 according to the first embodiment of the present invention will now be described. For the sake of simplification, a method of processing a two-dimensional digital pattern of eight bits, in which 4×4 pixels are defined as one block, will be described here.

In a reproduction method according to the present invention, even though luminance variation is caused in a reproduced image, the reproduced image can be corrected based on a luminance value of a region serving as the reference in reproduction processing, because encoding as described above is performed in advance. Thus, reduction in error bits can be achieved.

Fig. 9 is a flowchart showing a procedure for reproduction of information recorded in recording medium 107 by holographic recording and reproduction apparatus 100.

A procedure for reproduction of information by holographic recording and reproduction apparatus 100 will be described with reference to Fig. 9.

In step S900, photodetector 110 divides a detected two-dimensional digital pattern into sub blocks each including 2×2 pixels.

Next, in step S902, photodetector 110 calculates a luminance value of each sub block obtained in step S900. For example, the sum of luminance values of four pixels included in each sub block is adopted as the luminance value of the sub block.

In succession, in step S904, photodetector 110 detects a sub block to serve as the reference in reproduction processing. For example, a difference is detected for each sub block based on the sum of the luminance values of the sub block calculated in step S902, and a sub block having a lowest luminance value is adopted as the sub block to serve as the reference.

Then, in step S906, photodetector 110 carries out correction by subtracting as an offset, the luminance value of the sub block serving as the reference that has been detected in step S904 from the luminance value of each sub block.

Finally, in step S908, photodetector 110 binarizes luminance distribution of each sub block through threshold value processing, which is in turn collated with the rule shown in Fig. 5 or 6, and photodetector 110 performs bit determination so that information is reproduced.

Here, the method of reproducing information as described above will be described with reference to a specific example.

Fig. 10 is a diagram showing an example of a reproduced two-dimensional digital pattern 800.

Fig. 10(A) shows two-dimensional digital pattern 800 and Fig. 10(B) shows information of eight bits obtained by decoding the two-dimensional digital pattern. It is noted that Fig. 10(A) shows a light cut-off region with a hatched portion and a light-transmitting region with a white region.

As described above, two-dimensional digital pattern 800 is detected by a photodetector such as a CCD array or a CMOS. In the two-dimensional digital pattern in Fig. 10(A), color-coding using white and black is adopted, and in an ideal reproduced image, the reproduction light is present only in the white region and the reproduction light is absent in the hatched region.

In an actual reproduced image, however, unevenness is found in the white region or noise is partially present in the hatched region due to influence of stray light.

In the method of reproducing information in the holographic recording and reproduction apparatus according to the present invention, as shown in Fig. 10(A), two-dimensional digital pattern 800 representing a reproduced image of 4×4 pixels is divided into pixels 810, 812, 814, 816 each having 2×2 pixels for processing.

Then, a luminance value of each of 2×2 pixels 810, 812, 814, and 816 is determined. Thereafter, a difference in luminance value among 2×2 pixels 810, 812, 814, and 816 is detected, to find a region lowest in luminance value. Specifically, the sum of luminance values of four respective pixels included in each region of 2×2 pixels 810, 812, 814, and 816 is calculated. The sum of luminance values is calculated, and the difference is detected for each region 810, 812, 814, 816 of 2×2 pixels. As the hatched portion represents the light cut-off region and the white region represents the light-transmitting region in Fig. 10(A), a region having a lowest luminance value can be found by detecting the difference.

In Fig. 10(A), even though diffracted light of noise is present in the hatched regions of 2×2 pixels 810, 812, 816, the luminance values of three regions having 2×2 pixels 810, 812, 816 where reproduction light is present are higher than that of the region of 2×2 pixels 814. Accordingly, it can be found that the region of 2×2 pixels 814 has the lowest luminance value. Therefore, under the rule shown in Fig. 5, it is found that first two bits indicate "10" in reproduced two-dimensional digital pattern 800.

Similarly, for example, if 2×2 pixels 810 have the lowest luminance value, first two bits indicate "00". In addition, if 2×2 pixels 812 have the lowest luminance value, first two bits indicate "11". Moreover, if 2×2 pixels 816 have the lowest luminance value, first two bits indicate "01".

In the present embodiment, though the region having the lowest luminance value is adopted as the region to serve as the reference in the information reproduction processing, a region highest or lowest in luminance is used as the region to serve as the reference in the information reproduction processing. Therefore, detection of a region to serve as the reference can be facilitated.

In succession, distinction among bits in remaining 810, 812, 816 higher in luminance value than 2×2 pixels 814 will be described.

As described above, in Fig. 10(A), it has been found that 2×2 pixels 814 have the lowest luminance value. Therefore, the luminance value constituting 2×2 pixels 814 is determined, and the luminance value of 2×2 pixels 814 is subtracted as an offset from the luminance values of remaining 2×2 pixels 810, 812, 816 in two-dimensional digital pattern 800.

Thereafter, luminance distribution of 2×2 pixels 810, 812, 816 is binarized through threshold value processing, which is in turn collated with the rule shown in Fig. 6, and bit determination of two-dimensional digital pattern 800 representing the reproduced image of 4×4 pixels is carried out. Thus, bit determination can be carried out even when noise is produced in 2×2 pixels 810, 812, 816.

Thus, even when luminance variation is produced in the reproduced image, the reproduced image can be corrected every sixteen pixels based on the luminance value of the region serving as the reference in the information reproduction processing. In bit determination of 2×2 pixels 810, 812, 816, determination proceeds from the upper left toward the right end, and moving to the left end when the right end is reached and moving downward by two pixels, determination again proceeds toward the right end, skipping 2×2 pixels 814 having been found as lowest in the luminance value. Under the rule described above, bits shown in Fig. 10(B) are obtained.

For the sake of simplification, though the two-dimensional digital pattern including 4×4 pixels has been restored to information of eight bits in the present embodiment, the embodiment is not limited as such.

Fig. 11 is a diagram showing a reproduced image including 4×8 pixels and blocks resulting from division.

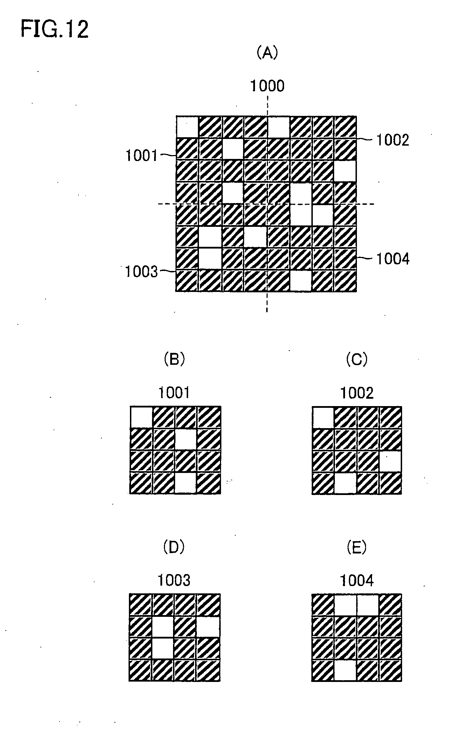

Fig. 12 is a diagram showing a reproduced image including 8×8 pixels and blocks resulting from division.

Restoration of a two-dimensional digital pattern other than the two-dimensional digital pattern including 4×4 pixels will be described with reference to Figs. 11 and 12.

For example, in an example of a reproduced image represented by a two-dimensional digital pattern 900 including 4x8 pixels as shown in Fig. 11(A), the reproduced image is divided into two blocks 901 and 902 every 4×4 pixels as shown in Figs. 11(B) and 11(C), and each of blocks 901 and 902 is divided into four sub blocks 910, 912, 914, 916 and 920, 922, 924, 926 each including 2×2 pixels. Then, a difference in luminance value among four sub blocks 910 to 916 and 920 to 926 in respective blocks 901 and 902 is detected, to determine a luminance value of a sub block to serve as the reference in image processing of blocks 901 and 902. The luminance value of the sub block serving as the reference is subtracted as an offset from the luminance value of remaining sub blocks. Thereafter, binarization of blocks through threshold value processing is carried out for blocks 901 and 902, to carry out bit determination.

In the example of the reproduced image represented by two-dimensional digital pattern 900 thus including 4x8 pixels, the reproduced image is divided into two blocks 901 and 902 every 4×4 pixels, so that information of sixteen bits can be restored by carrying out bit determination for each block.

Similarly, in an example of a two-dimensional digital pattern 1000 including 8x8 pixels as shown in Fig. 12(A), a reproduced image is divided into four blocks 1001 to 1004 every 4×4 pixels as shown in Figs. 12(B) to 12(E), and each of blocks 1001 to 1004 is further divided into four sub blocks each including 2×2 pixels as described above. Each of blocks 1001 to 1004 is subjected to a series of processing, to restore information of 32 bits. Alternatively, in an example of a reproduced image including 16n pixels, a reproduced image may be divided into n blocks every sixteen pixels and the processing may be performed as described above to restore information of 8n bits. Thus, even if a diameter of a luminous flux of object light is made larger and a capacity of page data is increased, image processing not susceptible to noise or the like can be achieved.

According to the holographic recording and reproduction apparatus of the present embodiment, one sub block including at least four pixels among sixteen pixels constituting a two-dimensional digital pattern can be recorded as a light cut-off state (or a light-transmitting state). Therefore, even though the two-dimensional digital pattern includes luminance variation, in each set of sixteen pixels, luminance can be adjusted every sixteen pixels, with the luminance value of the region that always cuts off light serving as the reference. In addition, as information is expressed by a position of a sub block of which all four pixels cut off light and states of respective four pixels constituting each of remaining sub blocks in the two-dimensional digital pattern, the two-dimensional digital pattern can have redundancy and reduction in error can be achieved.

In addition, according to the holographic recording and reproduction apparatus of the present embodiment, at most two bright bits can be consecutive in one direction in the two-dimensional digital pattern. Thus, concentration of bright bits can be avoided. Therefore, a low-frequency component in a bit pattern is suppressed and concentration of luminous energy in the low-frequency component in a Fourier plane is mitigated. Consequently, deterioration of an image due to medium saturation can be suppressed and a reproduced image having high SN can be obtained. Further, effective use of a dynamic range of a recording medium can be made, and hence a large number of holograms can be recorded in a multiplexed manner.

Moreover, according to the holographic recording and reproduction apparatus of the present embodiment, the two-dimensional digital pattern can have redundancy and the number of bright bits in the two-dimensional digital pattern can be increased. Therefore, efficiency in light utilization can be enhanced. In addition, as one of four sub blocks is a region that always cuts off light (or a region that transmits light) and has lowest (or highest) luminance, detection of a sub block region to serve as the reference in image processing is facilitated.

Further, according to the holographic recording and reproduction apparatus of the present embodiment, a two-dimensional digital pattern reproduced from holograms is divided into a plurality of blocks and these blocks are further divided into a plurality of sub blocks. Thus, even though luminance variation is produced in a reproduced image, the reproduced image can be corrected for each block based on a luminance value of the sub block.

### (Second Embodiment)

A second embodiment of the present invention will now be described. A holographic recording and reproduction apparatus according to the present embodiment is different from the holographic recording and reproduction apparatus according to the first embodiment in a method of reproducing information, as will be described below.

The structure of the holographic recording and reproduction apparatus according to the second embodiment is the same as in the first embodiment, and description thereof will not be repeated. In addition, as the method of encoding page data and the method of recording information in a recording medium are also the same as those described in the first embodiment, description thereof will not be repeated.

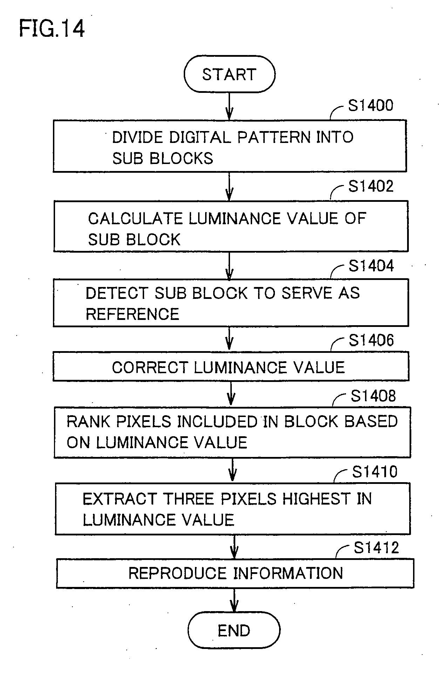

A procedure for reproduction of information by holographic recording and reproduction apparatus 100 according to the second embodiment will be described with reference to Fig. 14. Fig. 14 is a flowchart showing a procedure for reproduction of information recorded in recording medium 107 by the holographic recording and reproduction apparatus according to the second embodiment. Here, description will be given, assuming that the information is encoded in a block including three bright bits and thirteen dark bits.

In step S1408, photodetector 110 ranks a luminance value of each pixel included in the block. Here, as each sub block includes sixteen pixels, sixteen luminance values are ranked in the descending order.

In succession, in step S 1410, photodetector 110 extracts three pixels highest in luminance value (a pixel highest in luminance value, a pixel next highest in luminance value, and a pixel highest in luminance value next but one) among pixels each of which luminance value was ranked in step S1408. Thereafter, binarization processing for correcting three extracted pixels to bright bits and correcting thirteen remaining pixels to dark bits is performed. As the number of bright bits to be included in 4×4 pixels is limited to three at the greatest in the encoding scheme described above, binarization appropriate for one block can be expected through the processing above.

Finally, in step S 1412, photodetector 110 reproduces information as a result of collation with the rule shown in Fig. 5 or 6 and bit determination.

Reproduction of information encoded in a block including three bright bits and thirteen dark bits has been described above. On the other hand, in an example where information is encoded in a block including three dark bits and thirteen bright bits, photodetector 110 extracts three pixels lowest in luminance value in step S 1410.

### (Third Embodiment)

A third embodiment of the present invention will now be described. A holographic recording and reproduction apparatus according to the present embodiment is also different from the holographic recording and reproduction apparatus according to the first embodiment in a method of reproducing information.

The structure of the holographic recording and reproduction apparatus according to the third embodiment is the same as in the first embodiment, and description thereof will not be repeated. In addition, as the method of encoding page data and the method of recording information in a recording medium are also the same as those described in the first embodiment, description thereof will not be repeated.

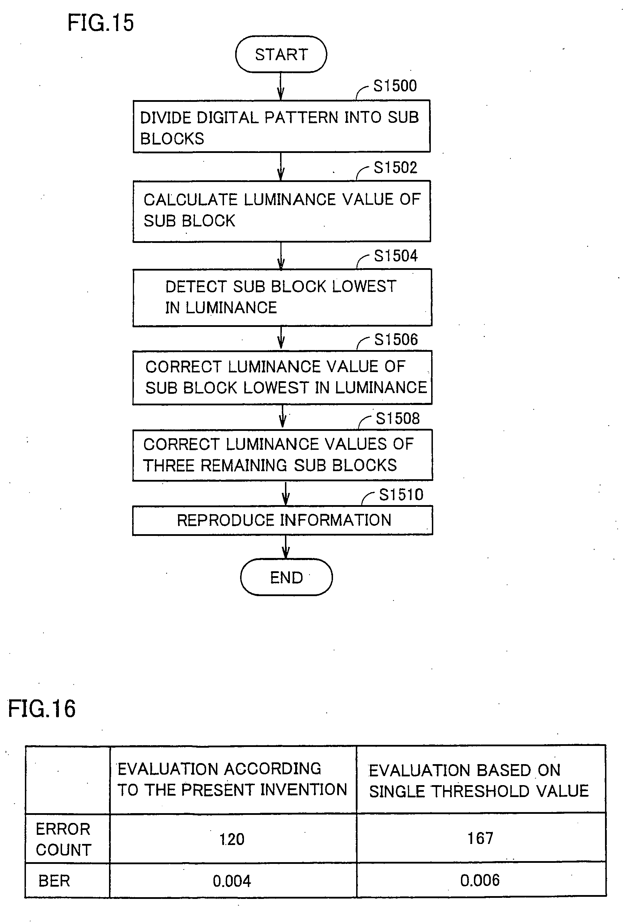

A procedure for reproduction of information by holographic recording and reproduction apparatus 100 according to the third embodiment will be described with reference to Fig. 15. Fig. 15 is a flowchart showing a procedure for reproduction of information recorded in recording medium 107 by the holographic recording and reproduction apparatus according to the third embodiment. It is assumed that the information is encoded in a block including three bright bits and thirteen dark bits.

In step S1500, photodetector 110 divides a block included in a detected two-dimensional digital pattern into sub blocks each including 2×2 pixels.

Next, in step S1502, photodetector 110 calculates a luminance value of each sub block obtained in step S1500. For example, the sum of luminance values of four respective pixels included in each sub block is defined as the luminance value of the sub block.

In step S1504, photodetector 110 detects a sub block lowest in luminance value.

In step S1506, photodetector 110 corrects the luminance value of pixels included in the sub block lowest in luminance value to 0.

In succession, in step S1508, photodetector 110 extracts a pixel highest in luminance value for each of three remaining sub blocks and sets the luminance values of pixels other than the pixel highest in luminance value to 0.

Finally, in step S 1510, photodetector 110 reproduces information as a result of collation with the rule shown in Fig. 5 or 6 and bit determination.

Fig. 16 is a diagram showing a result of evaluation of errors caused in a reproduction method in the third embodiment and a reproduction method through binarization processing using a single threshold value. This experimental data was obtained by reproducing a two-dimensional digital pattern obtained by encoding page data of 192 pixels ×192 pixels. In addition, two-dimensional digital patterns are recorded in a multiplexed manner in a recording medium, and the two-dimensional digital pattern that was evaluated represents one of them.

An error count and a value of a bit error rate (BER) in reproduction based on the technique according to the present invention were 120 and 0.004 respectively. On the other hand, an error count and a value of a bit error rate (BER) in reproduction processing following binarization processing based on a single threshold value for all pixels in a block were 167 and 0.006 respectively. Here, a luminance value in a valley of distribution of bright bits and dark bits in a histogram of a detected reproduced image was used as the threshold value. It can be seen from this experimental result that the number of errors could be reduced by using the reproduction technique according to the present invention.

### (Conclusion)

As described above, the holographic recording apparatus according to the invention of the subject application records information by irradiating a recording medium with object light representing information and reference light for recording and by writing interference fringes generated by the object light and the reference light for recording in the recording medium, and includes a spatial light modulator for spatially modulating a luminous flux for holographic recording of information and a control device for generating a two-dimensional digital pattern corresponding to the information, that includes n first sub sets each including sixteen elements, and controlling the spatial light modulator based on the two-dimensional digital pattern. The first sub set includes four second sub sets arranged at prescribed positions in the first sub set respectively. Each second sub set has four elements. The control device includes means for setting one element among the four elements included in each of three second sub sets among the four second sub sets to a first state and three elements to a second state, and means for setting all four elements included in one remaining second sub set among the four second sub sets to a second state. The holographic recording apparatus further includes a lens for focusing the object light and the reference light for recording on the recording medium.

In addition, the holographic reproduction apparatus according to the invention of the subject application reads information from a recording medium in which interference fringes between object light representing the information and reference light for recording are recorded, and includes a photodetector for detecting reproduction light carrying a two-dimensional digital pattern generated as a result of irradiation of the recording medium with reference light for reproduction and a division unit dividing the two-dimensional digital pattern included in the reproduction light into a plurality of first sub sets. The first sub set includes four second sub sets arranged at prescribed positions in the first sub set respectively. The second sub set has four elements. The element is in any state of a first state and a second state. The holographic reproduction apparatus includes a detection unit for dividing, for each of the plurality of first sub sets, the first sub set into a plurality of second sub sets and detecting a second sub set of which four elements are all in the second state from among the plurality of second sub sets, and a correction unit for correcting luminance of the plurality of second sub sets based on a luminance value of the second sub set of which four elements are all in the second state.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A holographic recording apparatus for recording information using optical interference fringes, comprising:
a spatial light modulator (112) for generating a two-dimensional digital pattern corresponding to said information with n first sub sets each including sixteen elements; and
a control device (210),
said first sub set including four second sub sets each including four elements,
said control device (210) including
means for setting one of the four elements included in each of three second sub sets among said four second sub sets to a first state and three elements to a second state, and
means for setting all four elements in one remaining second sub set among said four second sub sets to the second state.

2. The holographic recording apparatus according to claim 1, wherein
said spatial light modulator (112) includes a display device (210, 202a, 202b, 202c, 202d) for displaying said two-dimensional digital pattern,
said display device (210, 202a, 202b, 202c, 202d) has
a reference light generation region (202a, 202b, 202c, 202d) for generating reference light for recording from a luminous flux incident on said spatial light modulator, and
an object light generation region (201) for generating object light from the luminous flux incident on said spatial light modulator, and
said control device (210) has the two-dimensional digital pattern corresponding to said information displayed on said object light generation region (201).

3. The holographic recording apparatus according to claim 1, wherein
said first state represents an on (bright) bit and said second state represents an off (dark) bit.

4. The holographic recording apparatus according to claim 1, wherein
said first state represents an off (dark) bit and said second state represents an on (bright) bit.

5. A holographic reproduction apparatus for reading information from a recording medium (107) in which optical interference fringes are recorded, comprising:
a photodetector (110) for detecting reproduction light from said recording medium (107);
means (110, S900) for dividing a two-dimensional digital pattern included in said reproduction light into a plurality of first sub sets, said first sub set including four second sub sets arranged at prescribed positions in said first sub set respectively, said second sub set having four elements, said element is in any state of a first state and a second state; and
means (110, S904) for dividing said first sub set into a plurality of said second sub sets for each of said plurality of first sub sets and detecting a second sub set of which said four elements are all in said second state from among said plurality of second sub sets.

6. The holographic reproduction apparatus according to claim 5, further comprising means (110, S906) for correcting luminance of said plurality of second sub sets based on a luminance value of said second sub set of which said four elements are all in said second state.

7. The holographic reproduction apparatus according to claim 5, wherein
said information corresponds to the two-dimensional digital pattern including n first sub sets each including sixteen elements,
in three second sub sets among said four second sub sets, one element among the four elements included in said second sub set is in the first state and three elements thereamong are in the second state, and
in one remaining second sub set among said four second sub sets, four elements included in said second sub set are all in the second state.

8. The holographic reproduction apparatus according to claim 5, wherein
said second sub set of which said four elements are all in said second state is lowest in luminance value among said plurality of second sub sets,
said holographic reproduction apparatus further comprises means (110, S1408) for ranking, for each of said plurality of first sub sets, each element included in said first sub set based on the luminance value, and
said means (110, S 1410) for correcting luminance corrects three elements highest in luminance value among sixteen elements included in said first sub set to the first state and remaining elements to the second state.

9. The holographic reproduction apparatus according to claim 5, wherein
said second sub set of which said four elements are all in said second state is highest in luminance value among said plurality of second sub sets,
said holographic reproduction apparatus further comprises means (110, S1408) for ranking, for each of said plurality of first sub sets, each element included in said first sub set based on the luminance value, and
said means (110, S1410) for correcting luminance corrects three elements lowest in luminance value among sixteen elements included in said first sub set to the first state and remaining elements to the second state.

10. The holographic reproduction apparatus according to claim 5, wherein
said second sub set of which said four elements are all in said second state is lowest in luminance value among said plurality of second sub sets,
said means (110, S1506, S 1508) for correcting luminance
corrects all elements included in the second sub set of which said four elements are all in said second state to said off (dark) bits, and
corrects, for each of the second sub sets except for the second sub set of which said four elements are all in said second state among the second sub sets included in said first sub set, an element highest in luminance value among elements included in each said second sub set to said on (bright) bit and corrects elements other than said element highest in luminance value to said off (dark) bits.

11. The holographic reproduction apparatus according to claim 5, wherein
said second sub set of which said four elements are all in said second state is highest in luminance value among said plurality of second sub sets,
said means (110, S1506, S 1508) for correcting luminance
corrects all elements included in the second sub set of which said four elements are all in said second state to said on (bright) bits, and
corrects, for each of the second sub sets except for the second sub set of which said four elements are all in said second state among the second sub sets included in said first sub set, an element highest in luminance value among elements included in each said second sub set to said off (dark) bit and corrects elements other than said element highest in luminance value to said on (bright) bits.

12. An information encoding method for displaying information as a two-dimensional digital pattern of 8n bits every 16n bit patterns, said two-dimensional digital pattern including n first sub sets each including sixteen bit patterns, said first sub set including four second sub sets arranged at prescribed positions in said first sub set respectively, each said second sub set having four bit patterns, comprising the steps of:
setting one bit pattern among four bit patterns included in each of three second sub sets among said four second sub sets to a first state and three bit patterns to a second state (S804); and
setting all of the four bit patterns included in one remaining second sub set among said four second sub sets to a second state (S802).

13. The information encoding method according to claim 12, wherein
in said step of setting all of the four bit patterns to a second state (S802), 2n bits among said 8n bits are determined.

14. The information encoding method according to claim 12, wherein
in said step of setting one bit pattern among four bit patterns to a first state and three bit patterns to a second state (S804), 6n bits among said 8n bits are determined.

15. The information encoding method according to claim 12, further comprising the step of displaying said information as said two-dimensional digital pattern for holographic recording (S806).

16. A recording method for writing a digital pattern in a recording medium (107) by using an information encoding method for displaying information as a two-dimensional digital pattern of 8n bits every 16n bit patterns, said two-dimensional digital pattern including n first sub sets each including sixteen bit patterns, said first sub set including four second sub sets arranged at prescribed positions in said first sub set respectively, each said second sub set having four bit patterns, comprising the steps of:
setting one bit pattern among four bit patterns included in each of three second sub sets among said four second sub sets to a first state and three bit patterns to a second state (S804);
setting all of the four bit patterns included in one remaining second sub set among said four second sub sets to a second state (S802); and
writing said four second sub sets in said recording medium (107) (S808).

17. The recording method according to claim 16, wherein
said recording medium (107) is a hologram memory.

18. An information reproduction method for reading a two-dimensional digital pattern recorded by using an information encoding method for displaying information as a two-dimensional digital pattern of 8n bits every 16n bit patterns, comprising the steps of:
detecting said two-dimensional digital pattern;
dividing said two-dimensional digital pattern into a plurality of first sub sets, said first sub set including four second sub sets arranged at prescribed positions in said first sub set respectively, said second sub set having four bit patterns, said element being in any state of a first state and a second state; and
dividing, for each of said plurality of first sub sets, said first sub set into a plurality of said second sub sets and detecting a second sub set of which said four bit patterns are all in said second state from among said plurality of second sub sets (S900, S902).

19. The information reproduction method according to claim 18, further comprising the step of correcting luminance of said plurality of second sub sets based on a luminance value of said second sub set of which said four bit patterns are all in said second state (S906).

20. The information reproduction method according to claim 18, wherein
said information corresponds to the two-dimensional digital pattern including n first sub sets each including sixteen bit patterns,
in three second sub sets among said four second sub sets, one bit pattern among the four bit patterns included in said second sub set is in the first state and three digital patterns thereamong are in the second state, and
in one remaining second sub set among said four second sub sets, four bit patterns included in said second sub set are all in the second state.

21. The information reproduction method according to claim 18, wherein
said second sub set of which said four bit patterns are all in said second state is lowest in luminance value among said plurality of second sub sets,
said information reproduction method further comprises the steps of:
ranking, for each of said plurality of first sub sets, each bit pattern included in said first sub set based on the luminance value (S1408); and
correcting three bit patterns highest in luminance among sixteen bit patterns included in each of said plurality of first sub sets to the first state and remaining bits to the second state in accordance with a result of ranking based on said luminance value (S1410).

22. The information reproduction method according to claim 18, wherein
said second sub set of which said four bit patterns are all in said second state is highest in luminance value among said plurality of second sub sets,
said information reproduction method further comprises the steps of:
ranking, for each of said plurality of first sub sets, each bit pattern included in said first sub set based on the luminance value (S 1408); and
correcting three bit patterns lowest in luminance among sixteen bit patterns included in each of said plurality of first sub sets to the first state and remaining bit patterns to the second state in accordance with a result of ranking based on said luminance value (S1410).

23. The information reproduction method according to claim 18, wherein
said second sub set of which said four bit patterns are all in said second state is lowest in luminance value among said plurality of second sub sets,
said information reproduction method further comprises the steps of:
correcting all bit patterns included in the second sub set of which said four bit patterns are all in said second state to said off (dark) bits (S 1506); and
correcting, for each of the second sub sets except for the second sub set of which said four bit patterns are all in said second state among the second sub sets included in said first sub set, a bit pattern highest in luminance value among bit patterns included in each said second sub set to said on (bright) bit and correcting bit patterns other than said bit pattern highest in luminance value to said off (dark) bits (S1508).

24. The information reproduction method according to claim 18, wherein
said second sub set of which said four bit patterns are all in said second state is lowest in luminance value among said plurality of second sub sets,
said information reproduction method further comprises the steps of:
correcting all bit patterns included in the second sub set of which said four bit patterns are all in said second state to said on (bright) bits (S1506); and
correcting, for each of the second sub sets except for the second sub set of which said four bit patterns are all in said second state among the second sub sets included in said first sub set, a bit pattern highest in luminance value among bit patterns included in each said second sub set to said off (dark) bit and correcting bit patterns other than said bit pattern highest in luminance value to said on (bright) bits (S 1508).

25. The information reproduction method according to claim 18, for reading said information recorded in a hologram memory.
